# FASCICULE DE BREVET EUROPEEN

(11) **EP 1 917 664 B1**
(45) Date de publication et mention de la délivrance du brevet: **25.04.2012**
(21) Numéro de dépôt: 06778191.4
(22) Date de dépôt: 08.08.2006
(51) Int. Cl.: H04N 21/4627, H04N 21/4623, H04N 21/433

(54) **MÉTHODE DE TRAITEMENT DE CONTENUS À ACCÈS CONDITIONNEL PAR UNE UNITÉ D'UTILISATEUR**
VERFAHREN ZUM VERARBEITEN VON INHALTEN MIT BEDINGTEM ZUGANG DURCH EINE BENUTZEREINHEIT
METHOD FOR PROCESSING CONDITIONAL ACCESS CONTENTS BY A USER UNIT

(30) Priorité: 09.08.2005 EP 05107322
(43) Date de publication de la demande: 07.05.2008
(73) Titulaire: Nagravision SA, 1033 Cheseaux-sur-Lausanne (CH)
(72) Inventeur: THOMAS, Frédéric, CH-1213 Onex (CH); ROBYR, Sébastien, CH-1066 Epalinges (CH); KUDELSKI, Henri, CH-1071 Chexbres (CH); MOREILLON, Guy, CH-1042 Bioley-Orjulaz (CH); DESARZENS, Philippe, 1030 Bussigny (CH)
(74) Mandataire: Leman Consulting S.A.
(86) Numéro de dépôt international: PCT/EP2006/065132
(87) Numéro de publication internationale: WO 2007/017499

(56) Documents cités:
- EP-A- 1 215 905
- WO-A-03/107665

## Description

### Introduction

La présente invention concerne le domaine de la télévision à péage, en particulier le traitement de contenu stocké chez un utilisateur.

Cette invention s'applique plus précisément au domaine de la télévision à péage, dans laquelle un contenu est diffusé sous forme chiffrée, le déchiffrement de ce contenu étant autorisé à des conditions déterminées.

### Etat de la technique

Le développement du stockage sur disque dur a ouvert de nouvelles applications telles que le stockage d'émissions télévisuelles, le préchargement de films ou d'autres événements proposés à l'achat.

De façon bien connue, pour pouvoir visionner un événement de télévision à péage, tel qu'un film, un événement sportif ou un jeu notamment, plusieurs flux sont diffusés à destination d'une unité multimédia, par exemple d'un décodeur. Ces flux sont notamment d'une part, le fichier de l'événement sous forme d'un flux de données chiffrées et d'autre part, un flux de messages de contrôle permettant le déchiffrement du flux de données. Le contenu du flux de données est chiffré par au moins un "mot de contrôle" (Control Words = CW) et plus généralement par des mots de contrôle, renouvelés régulièrement. Le deuxième flux est appelé flux ECM (Entitlement Control Message) et peut être formé de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle est obtenu en déchiffrant les messages de contrôle au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Les opérations de sécurité sont généralement effectuées dans un module de sécurité associé à l'unité multimédia ou au décodeur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

L'unité d'utilisateur recevant le flux de données et le flux de messages, extrait les messages pour les transmettre au module de sécurité. Les messages arrivant en même temps que les données, le module de sécurité peut communiquer le mot de contrôle actif dès que celui-ci est requis. Selon les systèmes utilisés, un message de contrôle peut comprendre plus d'un mot de contrôle, par exemple deux pour que l'unité d'utilisateur dispose constamment du mot de contrôle courant et du mot de contrôle suivant.

Il se peut que parallèlement à l'utilisation de l'événement en mode diffusion, ce même événement est stocké sur le disque dur de l'unité d'utilisateur pour une utilisation postérieure. Ce mode de faire pose deux problèmes, à savoir la définition des conditions d'accès et le renouvellement de la clé de transmission TK.

Le premier problème soulevé concerne la gestion de l'accès à ce contenu, à savoir que les conditions pour le mode diffusion peuvent être différentes des conditions en mode différé. Une solution est de multiplier les conditions d'accès dans le message de contrôle tel que décrit dans le document WO01/80563.

Pour répondre au second problème, il a été proposé de créer un coffre à clé sur le disque dur pour mémoriser la clé de transmission TK valide au moment de la transmission de l'événement (voir WO03/079683).

Les opérateurs de distribution de contenus sont demandeurs pour une solution plus souple qui offre les mêmes avantages.

Le document WO 03/107665 décrit une solution la création d'une liste d'index formé lors de la réception du contenu et les messages de contrôle. Les messages de contrôle diffusés avec le contenu sont stockés et réutilisés postérieurement avec le fichier d'index. Dans le cas où les messages diffusés ne sont pas applicables pour une utilisation postérieure, ce document ne donne aucun enseignement comment traiter cette situation.

Le document EP 1215905 décrit une solution dans laquelle le contenu et transmis avec une liste contenant les mot de contrôle associé à chaque portion du contenu. Cette liste contient un identifiant permettant de faire le lien entre le contenu diffusé et les mots de contrôle stockés dans la liste. Cette liste est préparée au centre de diffusion et diffusé avec le contenu pour permettre la synchronisation des mots de contrôle et du contenu.

### Brève description de invention

Pour répondre à cette demande, la présente invention propose une méthode pour permettre qu'un contenu diffusé (live) accessible lors de la diffusion puisse être accessible également en mode différé grâce au stockage intermédiaire sur le disque dur de l'unité d'utilisateur.

Ce but est atteint par une méthode de traitement de contenus (DT) à accès conditionnel par une unité d'utilisateur (STB), cette unité recevant un flux de données (DT) encryptées par au moins un mot de contrôle (CW), un premier flux de messages de contrôle (ECM) diffusés avec le flux de données (DT) et un second flux de message de contrôle (PECM) diffusé non-simultanément, caractérisé en ce que cette méthode comprend les étapes suivantes:
- formation d'un fichier d'index (ID_TB), chaque index comprenant d'une part un identifiant d'un message de contrôle du premier flux de message de contrôle et formé par l'extraction de données associées auxdits premiers messages de contrôle (ECM) et comprenant d'autre part un identifiant de la portion du contenu auquel ce message de contrôle s'applique,
- lors du traitement différé du contenu (DT), extraction d'au moins une partie des seconds messages de contrôle, resynchronisation du contenu avec les seconds messages de contrôle par l'utilisation du fichier d'index, l'identifiant courant du contenu servant de pointeur pour l'identifiant de la portion du contenu du fichier d'index (IB_TB) et l'identifiant du premier message de contrôle correspondant permettant de sélectionner le second message de contrôle correspondant parmi l'ensemble des seconds messages de contrôle.

Cette méthode permet de disposer d'un fichier d'index qui est formé lors de la diffusion du contenu, cet index sera utilisé lors de l'utilisation différée du contenu.

Ce fichier d'index comprend au moins deux valeurs, soit l'identifiant d'un message de contrôle, et l'identifiant de la portion du contenu auquel ce message de contrôle s'applique. L'identifiant de message sera par exemple un compteur simple qui compte les messages alors que l'identifiant de pointage dans le contenu peut prendre de nombreuses formes. Ce pointeur peut représenter un offset d'octets depuis le début du contenu, un compteur de trames, un compteur de GOP (Group of Pictures), un pointeur horaire (Time Stamp), un pointeur de positionnement du stockage sur le disque dur ou tout autre pointeur qui permette à un équipement de localiser une position dans le contenu. Dans une première version dite non assistée, ce fichier est composé dans l'unité d'utilisateur. Cette dernière compose le fichier d'index sans aucune assistance c'est-à-dire en identifiant un premier message de contrôle et en comptant les messages afin d'établir un identifiant de message de contrôle. Parallèlement, à chaque détection d'un nouveau message de contrôle, l'unité d'utilisateur va extraire une donnée de positionnement du contenu tel que listée ci-dessus. Dans une version particulière, il pourrait s'agir du bloc de données stocké sur le disque.

Selon une seconde version dite partiellement assistée, il est possible d'extraire du premier message de contrôle un identifiant dudit message afin de composer le fichier d'index. L'identifiant de la position dans le contenu est établi par l'unité d'utilisateur par la détection de la position dans le contenu à ce moment.

Selon une troisième version dite assistée, les premiers messages de contrôle contiennent non seulement un identifiant du message de contrôle, mais également l'identifiant de la portion du contenu où ce message s'applique.

Des variantes de ces versions peuvent exister, soit un premier message de contrôle contenant l'identifiant de positionnement dans le contenu et un système de comptage pour établir d'identifiant du message.

Les données extraites des messages de contrôle sont de préférence dans une portion non encryptée par la clé de transmission afin de ne pas dépendre de l'autorisation à ce contenu pour créer le fichier d'index. En effet, les conditions d'accès au contenu "live" sont distinctes et cette méthode est indépendante du fait que le contenu soit accessible à l'utilisateur concerné ou non.

Lors de l'accès au contenu dans un mode différé, c'est les conditions d'accès des seconds messages de contrôle qui seront pris en compte. Dans une version simplifiée de l'invention, le fichier d'index contient le message de contrôle différé à la place de l'identifiant de message. Ceci est possible si ces messages sont diffusés en même temps que le contenu et l'unité d'utilisateur va stocker les messages de contrôle différé dans un fichier avec l'identifiant de la portion du contenu auquel s'applique ce message.

Il est à noter que cette version n'a plus besoin de la présence de message de contrôle "live" et peut fonctionner même si ce type de message est absent.

### Brève description des figures

L'invention sera mieux comprise grâce à la description détaillée qui va suivre et qui se réfère aux dessins annexés qui sont donnés à titre d'exemple nullement limitatif, à savoir:
- la figure 1 illustre les éléments principaux de l'invention, à savoir un centre de diffusion et une unité d'utilisateur,
- la figure 2 illustre le mécanisme de création de la table d'index.

### Description détaillée de l'invention

Le centre de diffusion HE est en charge de la diffusion "live" d'un contenu DT encrypté par au moins un mot de contrôle CW. Cette encryption peut soit avoir lieu préalablement à la diffusion (pré-encryption) ou lors de la diffusion. Des messages de contrôle ECM sont formés pour contenir ces mots de contrôle CW, de tels messages comprenant, en plus du mot de contrôle, les conditions d'accès au contenu, un marqueur horaire, voire selon les versions, un identifiant de message ID_ECM qui peut être un simple compteur de message. Si le mot de contrôle et les conditions d'accès doivent être encryptées par la clé de transmission TK afin d'éviter toute fraude, les autres données peuvent être dans une partie non-encryptée du message.

Il est à noter que l'identifiant de messages peut être le marqueur horaire ou un contrôle de redondance cyclique (Cyclic Redundancy Check crc) appliqué à un message de contrôle ECM.

Au moment de la diffusion, le centre de diffusion envoie le flux de données DT et le flux de messages de contrôle ECMs. Du côté de l'unité d'utilisateur, il est nécessaire de disposer de la clé de transmission TK afin de pouvoir décrypter les messages de contrôle. Selon les systèmes de protection d'accès, la disponibilité de la clé de transmission TK n'est pas suffisante pour qu'un module de sécurité accepte de décrypter et retourner le mot de contrôle à l'unité d'utilisateur. Le module de sécurité vérifie si le droit exigé dans le message de contrôle est présent dans ledit module et ne retourne le mot de contrôle que dans l'affirmative. Le centre de diffusion envoie également un flux de messages de contrôle différés PECM.

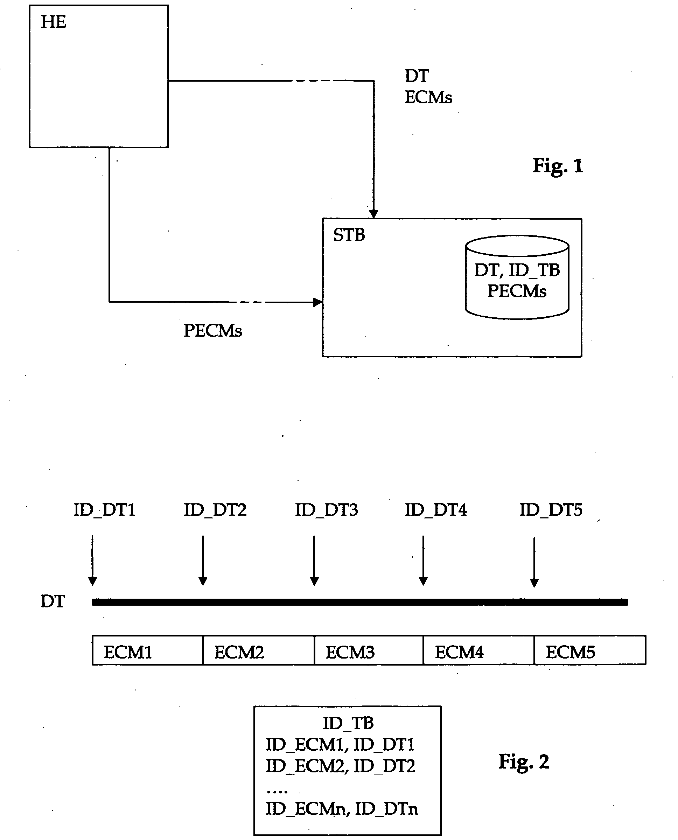

La formation de la table d'index ID_TB illustrée sur la figure 2 se fait selon plusieurs manières. Dans la première version dite non assistée, ce fichier est composé dans l'unité d'utilisateur STB. Cette dernière compose le fichier d'index en créant un index pour chaque message de contrôle ECM reçu. Cet index ID_ECMn peut être un simple compteur ou une marque horaire (time stamp) notamment. A chaque détection d'un nouveau message de contrôle, l'unité d'utilisateur va extraire une donnée de positionnement du contenu. Cette donnée permet de générer un identifiant de la portion du contenu auquel s'applique ce message de contrôle. Cette donnée ID_DTn peut être un offset d'octets dans le flux de données ou simplement un index du bloc de données stocké sur le disque dur.

Selon la seconde version dite partiellement assistée, il est possible d'extraire du message de contrôle ECM un identifiant ID_ECMn dudit message afin de composer le fichier d'index. L'identifiant de la position dans le contenu est établi par l'unité d'utilisateur par la détection de la position dans le contenu à ce moment.

Selon la troisième version dite assistée, les messages de contrôle ECMs contiennent non seulement un identifiant du message de contrôle, mais également l'identifiant de la portion du contenu où ce message s'applique.

Cette table d'index ID_TB est stockée sur le disque dur avec le contenu DT. L'ensemble de messages de contrôle différés PECMs est transmis dans un deuxième temps, par exemple lors de l'achat du contenu DT. Dans ce cas, les conditions d'utilisation seront extraites des messages de contrôle différés, dits aussi seconds messages de contrôle. Pour ce qui les des mots de contrôle CW, ces derniers pourront être extrait soit des premiers messages de contrôle (live) soit des seconds messages de contrôle.

Que le contenu ait été vu ou non lors de la diffusion n'a pas d'importance. Lors de l'achat du contenu DT, le centre de diffusion (ou un autre centre gérant l'achat différé) envoie un message contenant la clé MK permettant de décrypter les messages de contrôle différé PECMs. Bien que l'action d'un module de sécurité soit préférée, il est possible de faire fonctionner les différentes étapes de l'invention sans un tel module. Une fois la clé MK reçue par l'unité d'utilisateur, cette dernière peut décrypter les messages de contrôle différé PECMs. La table d'index sert à identifier quel message PECM doit être utilisé lors de la rediffusion du contenu DT.

Il est à noter que la clé MK permettant de décrypter les messages de contrôle différés PECM peut être une clé propre audit contenu DT ou une clé propre à plusieurs contenus, tels qu'une série, voire d'une manière plus générale, une clé qui soit propre à l'utilisation différée de contenus, quel que soit ce contenu. L'accès à un contenu spécifique est de préférence géré par les droits qui sont placés dans les messages de contrôle différés.

Selon l'exemple de pointeur de contenu relié à l'index du stockage sur le disque dur, lors de la lecture dudit bloc de données, la table d'index sur la base de cet identifiant ID_DTn, va retourner l'index correspondant ID_ECMn et donc permettre de retrouver le message de contrôle différé PECMn correspondant. Ceci suppose que l'indexation des messages de contrôle "live" ECM et l'indexation des messages différés PECM est le même.

Selon la variante simplifiée, la table d'index stocke directement le message de contrôle différé PECM lors de la formation de ladite table en lieu et place de l'identifiant de message. Ceci signifie qu'il est possible de diffuser le contenu sans la présence du flux de messages de contrôle immédiats (ECM). Cette variante permet le stockage en avance de contenus qui seront ensuite proposés à l'utilisateur.

Dans une variante avec module de sécurité, l'unité d'utilisateur STB reçoit un message de droit EMM contenant la clé propre à ce contenu MK et les droits pour y accéder. Ainsi le module de sécurité peut non seulement décrypter les messages de contrôle différé PECMs, mais régalement vérifier que les conditions d'accès à ce contenu sont remplies.

Dans une variante de l'invention, le fichier d'index est créé dans le centre de diffusion et transmis soit avec le contenu, soit lors de la transmission de l'ensemble des messages de contrôle différés PECM. Dans ce mode, l'indexation du contenu DT sera uniquement propre au contenu par exemple par un offset de trames ou une marque horaire (time stamp). L'indexation relative aux données de stockage du contenu est propre à chaque unité d'utilisateur et donc inconnue par le centre de diffusion.

Selon une variante de l'invention, la table d'index ID_TB contient pour chaque identifiant de message ID_ECM deux identifiants de contenus IDa_DT, IDb_DT . Ceci permet de facilement repérer lors de l'avance ou de recul le message PECM correspondant. Si la portion de données DT en cours d'accès est comprise dans intervalle, le pointeur de message de contrôle permet de retrouver le message PECM à utiliser.

## Revendications

1. Méthode de traitement de contenus (DT) à accès conditionnel par une unité d'utilisateur (STB), cette unité recevant un flux de données (DT) encryptées par au moins un mot de contrôle (CW), un flux de messages de contrôle (ECM) diffusés avec le flux de données (DT) et un flux de messages de contrôle différé (PECM) diffusé non-simultanément, cette méthode comprenant les étapes suivantes:
Lors de la diffusion du contenu :
- formation d'un fichier d'index (ID_TB), chaque index comprenant d'une part un identifiant d'un message de contrôle du flux de message de contrôle et formé par l'extraction de données associées auxdits premiers messages de contrôle (ECM) et comprenant d'autre part un identifiant de la portion du contenu auquel ce message de contrôle s'applique,
Lors du traitement différé du contenu (DT),
- extraction d'au moins une partie des messages de contrôle différés (PECM), resynchronisation du contenu avec les messages de contrôle différés (PECM) par l'utilisation du fichier d'index, l'identifiant courant du contenu servant de pointeur pour l'identifiant de la portion du contenu du fichier d'index (IB_TB) et l'identifiant du message de contrôle correspondant permettant de sélectionner le message de contrôle différé correspondant parmi l'ensemble des messages de contrôle différés.

2. Méthode de traitement de contenus (DT) selon la revendication 1, **caractérisée en ce que** le flux de messages de contrôle (ECM) sont propres à l'utilisation immédiate du contenu

3. Méthode de traitement de contenus (DT) selon la revendication 1, **caractérisée en ce que** le flux de messages différés de contrôle est diffusé préalablement à la diffusion du flux de données (DT).

4. Méthode de traitement de contenus (DT) selon la revendication 1, **caractérisée en ce que** le flux de messages de contrôle différés est diffusé postérieurement à la diffusion du flux de données (DT).

5. Méthode de traitement de contenus (DT) selon les revendications 1 à 4, **caractérisée en ce que** l'identifiant du message de contrôle (ID_ECM) est extrait des données transmises avec le message de contrôle (ECM).

6. Méthode de traitement de contenus (DT) selon les revendications 1 à 4, **caractérisée en ce que** l'identifiant du message de contrôle (ID_ECM) est obtenu par comptage des messages de contrôle (ECM).

7. Méthode de traitement de contenus (DT) selon l'une des revendications 1 à 6, **caractérisée en ce que** l'identifiant de la portion du contenu (ID_DT) est obtenu par extraction d'un indicateur d'avancement du contenu (DT) lors de la détection d'un nouveau message de contrôle (ECM).

8. Méthode de traitement de contenus (DT) selon la revendication 7, **caractérisée en ce que** cet indicateur est un compteur de trames.

9. Méthode de traitement de contenus (DT) selon la revendication 7, **caractérisée en ce que** cet indicateur est une marque horaire.

10. Méthode de traitement de contenus (DT) selon la revendication 7, **caractérisée en ce que** cet indicateur est un compteur de groupe de trames (GOP).

11. Méthode de traitement de contenus (DT) selon l'une des revendications 1 à 6, **caractérisée en ce que** l'identifiant de la portion du contenu (ID_DT) est obtenu par la position de stockage du contenu (DT) lors de la détection d'un nouveau message de contrôle (ECM).

12. Méthode de traitement de contenus (DT) selon l'une des revendications 1 à 11, **caractérisée en ce que** la table d'index (ID_TB) comprend deux identifiants de la portion du contenu, le premier lors de la détection d'un nouveau message de contrôle (ECM), le second lors de fin de validité du message de contrôle concerné.

13. Méthode de traitement de contenus (DT) selon l'une des revendications 1 à 12, **caractérisée en ce que** les messages de contrôle (ECM) contiennent des premières conditions d'accès audit contenu (DT) et **en ce que** les messages de contrôle différés (PECM) contiennent des secondes conditions d'accès audit contenu (DT).

14. Méthode de traitement de contenus (DT) selon la revendication 13, **caractérisée en ce que** lesdites premières et secondes conditions d'accès sont différentes.

15. Méthode de traitement de contenus (DT) selon la revendication 13, **caractérisée en ce que** lesdites premières et secondes conditions d'accès sont identiques.

## Claims

1. Processing method of conditional access content (DT) by a user unit (STB), this unit receiving a data stream (DT) encrypted by at least one control word (CW), a control message stream (ECM) broadcasted with the data stream (DT) and a differed control message stream (PECM) not simultaneously broadcasted, **characterized in that** this method includes the following steps:
while the content is broadcasted :
- formation of an index file (ID_TB), each index comprising on one hand an identifier of a control message of the control message stream and formed by the extraction of data associated to said control messages (ECM) and comprising on the other hand an identifier of the part of the content to which this control message is applied,
during the deferred processing of the content (DT),
- extraction of at least one part of the differed control messages (PECM), resynchronisation of the content with the differed control messages through the use of the index file, the current identifier of the content serving as a pointer for the identifier of the part of the content of the index file (IB_TB) and the identifier of the corresponding control message allowing the selection of the differed corresponding control message from among the set of differed control messages.

2. Content processing method (DT) according to claim 1, **characterized in that** the stream of control messages (ECM) pertains to the immediate use of the content

3. Content processing method (DT) according to claim 1, **characterized in that** the differed control message stream is broadcasted prior to the diffusion of the data stream (DT).

4. Content processing method (DT) according to claim 1, **characterized in that** the differed control message stream is broadcasted subsequently to the diffusion of the data stream (DT).

5. Content processing method (DT) according to claims 1 to 4, **characterized in that** the identifier of the control message (ID _ECM) is extracted from the data transmitted with the control message (ECM).

6. Contents processing method (DT) according to claims 1 to 4, **characterized in that** the identifier of the control message (ID _ECM) is obtained by counting the control messages (ECM).

7. Content processing method (DT) according to one of the claims 1 to 6, **characterized in that** the identifier of the part of the content (ID_DT) is obtained through the extraction of a fast-forward indicator of the content (DT) at the time of the detection of a new first control message (ECM).

8. Content processing method (DT) according to claim 7, **characterized in that** this indicator is a frame counter.

9. Content processing method (DT) according to claim 7, **characterized in that** this indicator is a time stamp.

10. Content processing method (DT) according to claim 7, **characterized in that** this indicator is a frame group counter (GOP).

11. Content processing method (DT) according to one of the claims 1 to 6, **characterized in that** the identifier of the part of the content (ID_DT) is obtained through the storage position of the content (DT) at the time of the detection of a new control message (ECM).

12. Content processing method (DT) according to one of the claims 1 to 11, **characterized in that** the index table (ID TB) includes two identifiers of the part of the content, the first at the time of the detection of a new control message (ECM), the second at the time of end of the validity of the related control message.

13. Content processing method (DT) according to one of the claims 1 to 12, **characterized in that** the control messages (ECM) contain the first access conditions to said content (DT) and **in that** the differed control messages (PECM) contain second access conditions to said content (DT).

14. Content processing method (DT) according to claim 13, **characterized in that** said first and second access conditions are different.

15. Content processing method (DT) according to claim 13, **characterized in that** said first and second access conditions are identical.

## Patentansprüche

1. Verfahren zum Verarbeiten von Inhalten (DT) mit bedingtem Zugang durch eine Benutzereinheit (STB), wobei diese Einheit einen Datenfluss (DT) empfängt, der durch mindestens ein Kontrollwort (CW) verschlüsselt ist, einen Fluss von Kontrollnachrichten (ECM), die mit dem Datenfluss (DT) gesendet werden, und einen Fluss von Nachrichten zur späteren Kontrolle (PECM), die nicht gleichzeitig gesendet werden, wobei dieses Verfahren die folgenden Schritte umfasst:
Bei der Verbreitung des Inhalts:
Bildung einer Indexdatei (ID_TB), wobei jeder Index einerseits eine Identifizierung einer Kontrollnachricht über den Kontrollnachrichtenfluss umfasst, gebildet von der Extraktion von Daten, die mit den genannten ersten Kontrollnachrichten (ECM) verbunden sind, und andererseits eine Identifizierung desjenigen Teils des Inhalts, auf den diese Kontrollnachricht sich bezieht,
Bei der späteren Verarbeitung des Inhalts (DT),
- Extraktion mindestens eines Teils der Nachrichten zur späteren Kontrolle (PECM), Resynchronisation des Inhalts mit den Nachrichten zur späteren Kontrolle (PECM) durch die Benutzung der Indexdatei, wobei die derzeitige Identifizierung des Inhalts als Zeiger für die Identifizierung des Teils des Inhalts der Indexdatei (IB_TB) dient und die Identifizierung der entsprechenden Kontrollnachricht es gestattet, die entsprechende Nachricht zur späteren Kontrolle unter allen Nachrichten zur späteren Kontrolle auszuwählen.

2. Verfahren zum Verarbeiten von Inhalten (DT) nach Anspruch 1, **gekennzeichnet dadurch, dass** der Kontrollnachrichtenfluss (ECM) für die sofortige Benutzung des Inhalts geeignet ist.

3. Verfahren zum Verarbeiten von Inhalten (DT) nach Anspruch 1, **gekennzeichnet dadurch, dass** der Fluss von Nachrichten zur späteren Kontrolle vor dem Datenfluss (DT) gesendet wird.

4. Verfahren zum Verarbeiten von Inhalten (DT) nach Anspruch 1, **gekennzeichnet dadurch, dass** der Fluss von Nachrichten zur späteren Kontrolle nach dem Datenfluss (DT) gesendet wird.

5. Verfahren zum Verarbeiten von Inhalten (DT) nach den Ansprüchen 1 bis 4, **gekennzeichnet dadurch, dass** die Identifizierung der Kontrollnachricht (ID_ECM) aus den mit der Kontrollnachricht (ECM) übertragenen Daten extrahiert wird.

6. Verfahren zum Verarbeiten von Inhalten (DT) nach den Ansprüchen 1 bis 4, **gekennzeichnet dadurch, dass** die Identifizierung der Kontrollnachricht (ID ECM) durch Zählung der Kontrollnachrichten (ECM) erhalten wird.

7. Verfahren zum Verarbeiten von Inhalten (DT) nach einem der Ansprüche 1 bis 6, **gekennzeichnet dadurch dass** die Identifizierung des Teils des Inhalts (ID_DT) durch Extraktion eines Fortschrittszählers des Inhalts (DT) bei Auffinden einer neuen Kontrollnachricht (ECM) erhalten wird.

8. Verfahren zum Verarbeiten von Inhalten (DT) nach Anspruch 7, **gekennzeichnet dadurch, dass** dieser Zähler ein Rahmenzähler ist.

9. Verfahren zum Verarbeiten von Inhalten (DT) nach Anspruch 7, **gekennzeichnet dadurch, dass** dieser Zähler ein Zeitstempel ist.

10. Verfahren zum Verarbeiten von Inhalten (DT) nach Anspruch 7, **gekennzeichnet dadurch, dass** dieser Zähler ein Rahmengruppenzähler (GOP) ist.

11. Verfahren zum Verarbeiten von Inhalten (DT) nach einem der Ansprüche 1 bis 6, **gekennzeichnet dadurch dass** die Identifizierung des Teils des Inhalts (ID_DT) durch die Speicherposition des Inhalts (DT) bei Auffinden einer neuen Kontrollnachricht (ECM) erhalten wird.

12. Verfahren zum Verarbeiten von Inhalten (DT) nach einem der Ansprüche 1 bis 11, **gekennzeichnet dadurch, dass** die Indextabelle (ID_TB) zwei Identifizierungen des Teils des Inhalts umfasst, die erste bei Auffinden einer neuen Kontrollnachricht (ECM), die zweite am Ende der Gültigkeit der betroffenen Kontrollnachricht.

13. Verfahren zum Verarbeiten von Inhalten (DT) nach einem der Ansprüche 1 bis 12, **gekennzeichnet dadurch, dass** die Kontrollnachrichten (ECM) erste Zugangsbedingungen für den genannten Inhalt (DT) enthalten sowie dadurch, dass die Nachrichten zur späteren Kontrolle (PECM) zweite Zugangsbedingungen für den genannten Inhalt (DT) enthalten.

14. Verfahren zum Verarbeiten von Inhalten (DT) nach Anspruch 13, **gekennzeichnet dadurch, dass** besagte erste und zweite Zugangsbedingungen verschieden sind.

15. Verfahren zum Verarbeiten von Inhalten (DT) nach Anspruch 13, **gekennzeichnet dadurch, dass** besagte erste und zweite Zugangsbedingungen identisch sind.
